## Europäisches Patentamt

## European Patent Office

## Office européen des brevets

(19)

(11) Numéro de publication: **0 271 384**
**B1**

(12)

# FASCICULE DE BREVET EUROPEEN

(45) Date de publication du fascicule du brevet:
24.01.90

(51) Int. Cl.⁴: **F01M 1/02**, F16J 15/14

(21) Numéro de dépôt: **87402559.6**

(22) Date de dépôt: **12.11.87**

(54) **Dispositif assurant la circulation d'un lubrifiant dans un circuit de lubrification d'un moteur à combustion interne.**

(30) Priorité: **08.12.86 FR 8617141**

(43) Date de publication de la demande:
**15.06.88 Bulletin 88/24**

(45) Mention de la délivrance du brevet:
**24.01.90 Bulletin 90/4**

(84) Etats contractants désignés:
**DE GB IT**

(56) Documents cités:
**EP-A- 0 161 421**
**DE-C- 313 021**
**FR-A- 2 349 773**
**FR-A- 2 456 235**
**GB-A- 2 027 807**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Garnier, Patrick, 1, Allée de l'Ivraie Résidence La Fontaine, F-78180 Montigny-Le-Bretonneux(FR)**

(74) Mandataire: **Bouget, Lucien et al, Cabinet Lavoix 2, Place d'Estienne d'Orves, F-75441 Paris Cédex 09(FR)**

## Description

L'invention concerne un dispositif assurant la circulation d'un lubrifiant dans un circuit de lubrification d'un moteur à combustion interne comportant une pompe à engrenages ayant un corps rapporté sur une pièce du moteur.

Une pompe à engrenages d'un tel dispositif de lubrification de moteur comporte deux pignons qui engrènent l'un avec l'autre et qui sont montés ritatifs à l'intérieur d'une chambre formée de deux alésages sécants et de deux zones médianes opposées recoupant les alésages dans leur partie commune de part et d'autre du plan contenant leurs axes. Les engrenages sont montés chacun dans un alésage de la chambre avec son axe de rotation suivant l'axe de l'alésage. La chambre de la pompe est délimitée par deux faces perpendiculaires aux axes des alésages et des pignons et les deux zones médianes débouchent sur l'une de ces faces de façon à se trouver dans le prolongement de deux conduits correspondants du circuit de lubrification constituant respectivement un conduit d'aspiration et un conduit de refoulement d'huile. L'un des pignons est solidaire d'un arbre sur lequel est fixé un moyen d'entraînement en rotation du pignon.

Pour éviter de réaliser la chambre dont l'usinage est relativement complexe directement dans une pièce importante du moteur tel que le carter-cylindres et pour permettre d'équiper un même moteur ou divers moteurs d'un même type, d'une pompe ayant un débit parfaitement adapté à ce moteur, il est préférable de rapporter sur la pièce du moteur, le corps de la pompe renfermant la chambre et les deux pignons. On peut ainsi, en prévoyant un corps de pompe et un jeu d'engrenages réalisés spécialement, avoir pour chaque type de moteurs le débit d'huile souhaité. Le corps de la pompe comporte un palier traversant pour l'arbre d'en traînement et renferme la chambre dans laquelle sont montés les deux pignons. Le corps de la pompe vient en contact avec la pièce du moteur par l'intermédiaire d'une surface plane de cette pièce sur laquelle débouchent les conduits d'aspiration et de refoulement. Cette face plane de la pièce du moteur constitue également l'une des faces délimitat la chambre de la pompe. La pompe est fixée sur la pièce du moteur par des vis traversant des extensions radiales du corps.

On connaît une pompe dont la chambre est réalisée dans une pièce cylindrique emmanchée dans un alésage borgne du corps dont l'axe est parallèle à l'axe des pignons. La chambre de la pompe est délimitée, à l'opposé de la surface plane d'appui de la pièce du moteur, par le fond de l'alésage borgne du corps. Un joint annulaire d'étanchéité faciale est intercalé entre le corps et la face d'appui de la pièce du moteur. Les extensions rediales du corps permettant sa fixation sur la pièce du moteur sont situées à l'extérieur de l'alésage borgne, si bien que la pompe présente un encombrement relativement important.

Le but de l'invention est donc de proposer un dispositif assurant la circulation d'un lubrifiant dans un circuit de lubrification d'un moteur à combustion interne comportant une pompe à engrenages ayant un corps rapporté sur une pièce du moteur suivant une surface plane de cette pièce sur laquelle débouchent au moins deux conduits du circuit de lubrification, le corps renfermant une chambre constituée de deux alésages sécants à axes parallèles dans chacun desquels un engrenage est monté rotatif autour de l'axe de l'alésage et deux zones médianes recoupant les alésages dans leur partie commune, de part et d'autre des engrenages, et débouchant, chacune dans le prolongement d'un conduit de lubrification, au niveau de la surface plane de la pièce du moteur constituant une face limitant la chambre perpendiculairement aux axes des alésages, l'un des engrenages étant relié à un moyen d'entraînement en rotation et engrènant avec l'autre engrenage, dispositif qui soit d'un encombrement réduit et d'une grande facilité de montage.

Dans ce but, la pièce du moteur comporte un alésage borgne dont le fond constitue la surface plane sur laquelle débouchent les conduits de lubrification et le corps de la pompe comporte une partie limitée extérieurement par une surface cylindrique entourant la chambre dont l'axe est parallèle à l'axe des alésages de la chambre, cette partie étant logée dans l'alésage borgne de la pièce du moteur, en contact étanche avec cet alésage dans une zone continue entourant la chambre et la fixation du corps de la pompe sur la pièce du moteur étant assurée par des vis traversant sa partie cylindrique, suivant des directions axiales et engagées dans des trous taraudés de la pièce du moteur.

Afin de bein faire comprendre l'invention, on va maintenant décrire, à titre d'exemple non limitatif, un mode de réalisation d'un dispositif selon l'invention, de mise en circulation d'un lubrifiant dans un circuit de librification d'un moteur à combustion interne.

La figure 1 est une vue en coupe suivant 1-1 de la figure 2, d'un dispositif suivant l'invention comportant une pompe à engrenages logée dans le carter cylindre d'un moteur à combustion interne.

La figure 2 est une vue en coupe suivant 2-2 de la figure 1.

La figure 3 est une vue en coupe suivant 3-3 de la figure 1.

La figure 4 est une vue en coupe suivant 4-4 de la figure 1.

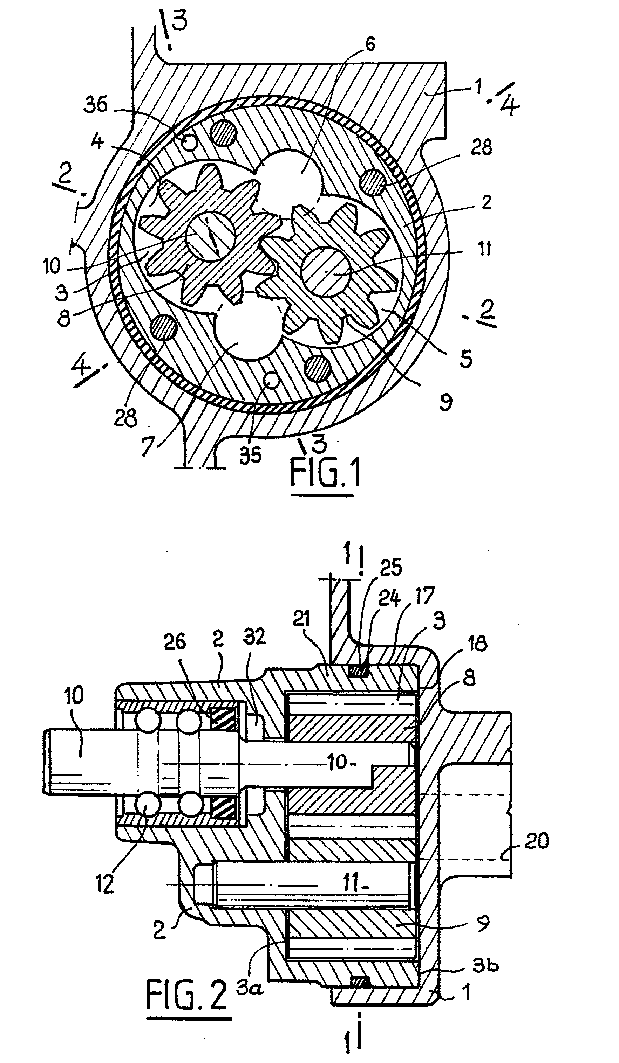

Sur la figure 1, on voit une partie 1 du carter-cylindres d'un moteur à combustion interne dans lequel est logé le corpos 2 d'une pompe à engrenages. Ce corps 2 renferme une chambre 3 constituée de deux alésages sécants 4 et 5 à axes parallèles et de deux zones médianes 6 et 7 recoupant les alésages 4 et 5, au voisinage de leur partie commune, de part et d'autre du plan renfermant les axes des alésages.

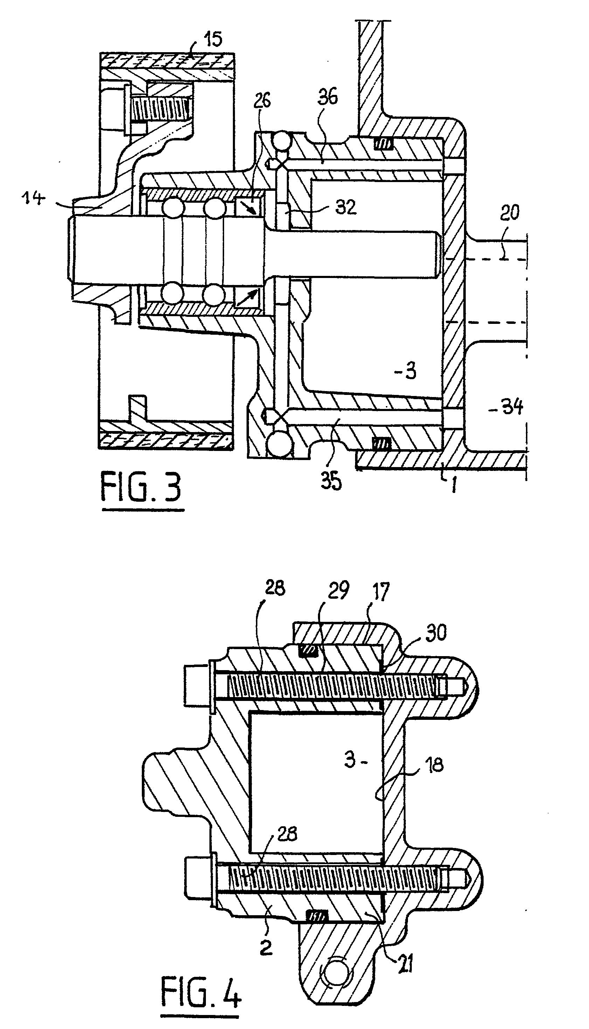

Comme il est visible sur les figures 1 et 2, des engrenages 8 et 9 engrènant l'un avec l'autre sont montés respectivement dans les alésages 4 et 5, sur des arbres respectifs 10 et 11 disposés suivant l'axe de l'alésage correspondant. L'arbre 10 sur lequel est monté l'engrenage 8 est un arbre d'entraînement monté rotatif dans un palier à bille 12, de façon que son extrémité opposée à l'engrenage 8 se trouve à l'extéreiur du corps 2 de la pompe. Comme il est visible sur la figure 3, cette extrémité de l'arbre 10 est solidaire d'une poulie 14 sur laquelle passe une courroie 15 assurant l'entraînement de l'arbre 10 et du pignon 8 en rotation, à partir du vilebrequin du moteur. Cette courroie 15 peut être constituée avantageusement par la courroie de distribution du moteur.

L'extrémité de l'arbre 10 engagée dans un alésage central du pignon 8 comporte un usinage suivant une demi-section qui est engagée dans une partie correspondante de l'alésage du pignon 8. L'arbre 10 et le pignon 8 sont ainsi solidaires en rotation.

L'arbre 11, sur lequel le pignon 9 est monté rotatif, est emmanché dans un alésage borgne du corps 2 de la pompe.

La chambre 3 de la pompe est usinée directement à l'intérieur du corps 2 et comporte une face plane 3a perpendiculaire aux axes des alésages et des pignons ménagée à l'intérieur du corps 2. La face opposée 3b de la chambre 3 est constituée par une surface plane externe du carter-cylindres 1.

Les alésages 4 et 5 ainsi que les zones médianes 6 et 7 de la chambre 3 débouchement en effet sur une face plane du corps 2 qui vient en contact avec la face plane du carter-cylindres 1.

Les engrenages 8 et 9 sont montés rotatifs avec un faible jeu radial à l'intérieur des alésages 4 et 5.

Selon l'invention, le carter cylindre 1 comporte un alésage borgne 17 dont le fond 18 constitue la surface plane d'appui du corps 2 de la pompe et la face 3b de fermeture de la chambre 3. A travers ce fond 18, débouchent deux conduits tels que le conduit 20 visible sur les figures 2 et 3. L'un des deux conduits constitue un conduit d'aspiration et l'autre un conduit de refoulement du circuit de lubrification du moteur.

Le corps 2 de la pompe comporte une partie 21 limitée extérieurement par une surface cylindrique entourant la chambre 3 dont l'axe est parallèle à l'axe des alésages 4 et 5 et donc à l'axe de rotation des pignons 8 et 9. Cette partie cylindrique 21 comporte un diamètre très légèrement inférieur au diamètre de l'alésage borgne 17 du carter cylindre 1. La partie 21 du corps 2 est engagée dans l'alésage borgne 17 de façon que l'extrémité du corps 2 vienne en appui contre le fond 18 de cet alésage borgne.

Lorsque la pompe est montée sur le carter cylindre 1, sa partie 21 étant engagée dans l'alésage borgne 17, les zones médianes 6 et 7 de la chambre 3 viennent chacune dans le prolongement d'un conduit 20. Le sens de rotation des engrenages 8 et 9 de la pompe permet de distinguer une zone d'aspiration et une zone de refoulement dans la chambre 3 qui sont mises en communication respectivement avec le conduit d'aspiration et avec le conduit de refoulement traversant le fond 18 de l'alésage borgne 17.

La partie cylindrique 21 du corps 2 de la pompe comporte, sur sa surface périphérique, une gorge 24 dans laquelle est introduit un joint d'étanchéité 25. Ce joint 25 assure l'étanchéité entre le corps 21 et l'alésage 17, dans une zone continue située tout autour de la chambre 3.

L'étanchéité de la chambre 3, autour de l'arbre d'entraînement 10 est assurée par un joint d'étanchéité 26 intégré au palier à billes 12 de l'arbre 10.

Comme il est visible sur la figure 4, le corps 2 de la pompe est fixé sur le carter cylindre 1 par l'intermédiaire de vis 28 traversant ce corps dans des alésages 29 de direction axiale, au niveau de la partie cylindrique 21. Les extrémités des vis sont engagées dans des trous taraudés usinés dans le fond 18 de l'alésage borgne 17 du carter cylindre 1. Autour de chacune des vis 28, entre le corpos 2 de la pompe 3 et le fond 18 de l'alésage 17, est interposé un joint annulaire 30 d'étanchéité faciale. Ce joint peut être notamment réalisé sous la forme d'un anneau en silicone déposé par sérigraphie sur l'une des faces en contact, c'est-à-dire la face d'extrémité du corps 2 de la pompe ou le fond 18 de l'alésage 17 du carter cylindre 1.

Comme il est visible sur les figures 2 et 3, une chambre annulaire 32 est usinée dans le corps de pompe 2, autour du trou de passage de l'arbre 10, entre le palier 12 et la chambre 3. Cette chambre annulaire 32 constitue une chambre de dépression entre la chambre interne de la pompe et le palier de l'arbre d'entraînement muni de son joint d'étanchéité 26. Deux canaux 35 et 36 débouchent dans la chambre 32 pour mettre cette chambre en communication avec le compartiment interne 34 du carter-cylindres 1. Le canal 35 permet le retour des fuites internes de la pompe vers le compartiment interne du moteur et le canal 36 permet d'équilibrer les pressions entre la chambre 32 et le compartiment 34 du moteur.

La pompe est fixée sur le carter-cylindres 1, grâce aux vis 28, de façon telle que la chambre 3 soit totalement étanche et qu'aucune fuite d'huile ne puisse se produire vers l'extérieur. Cette étanchéité est obtenue à la fois par le joint d'étanchéité 25, les joint 30 des vis et le joint 26 de l'arbre d'entraînement 10.

D'autre part, la fixation par les vis 28 traversant la partie cylindrique 21 du corps de pompe 2 dans la direction axiale permet de limiter l'encombrement radial total de la pompe. En effet, les moyens de fixation sont contenus à l'intérieur de la surface cylindrique constituant l'enveloppe extérieure du corps de pompe 2 et la surface intérieure de l'alésage 17 du carter cylindre 1. Le montage de la pompe est une opération très facile à réaliser puisque cette pompe est parfaitement engagée par sa partie 21 dans l'alésage 17 et que les têtes des vis 28 sont parfaitement accessibles sur la face avant de la pompe.

L'invention ne se limite pas au mode de réalisation qui a été décrit.

C'est ainsi que l'étanchéité autour de la chambre 3 peut être réalisée par un joint torique engagé dans une gorge usinée à l'intérieur de l'alésage borgne 17. Cette étanchéité pourrait également être réalisée par un joint déposé sur la face d'appui du corps 2 de la pompe ou sur le fond 18 de l'alésage 17 constituant une zone continue autour de la chambre 3.

Un tel joint d'étanchéité faciale peut être réalisé grâce à un dépôt par sérigraphie, de silicone dans la zone voulue. Dans ce cas, le dépôt par sérigraphie de la matière constituant le joint d'étanchéité pourrait être étendu à toute la surface d'appui du corps 2 de la pompe, autour de la chambre 3 et des vis 28.

Dans le cas où il serait possible de disposer les vis 28 à l'extérieur de la zone continue réalisant l'étanchéité autour de la chambre 3, il ne serait pas nécessaire de placer des joints d'étanchéité faciale autour de ces vis.

Le dispositif de mise en circulation de lubrifiant suivant l'invention peut s'appliquer à tout type de moteur comportant un circuit de lubrification.

## Revendications

1.- Dispositif assurant la circulation d'un lubrifiant dans un circuit de librification d'un moteur à combustion interne et comportant une pompe à engrenages ayant un corps (2) rapporté sur une pièce (1) du moteur suivant une surface plane (18) de cette pièce sur laquelle débouchent au moins deux conduits (20) du circuit de lubrification, le corps (2) renfermant une chambre (3) constituée de deux alésages sécants (4, 5) à axes parallèles dans chacun desquels un engrenage (8, 9) est monté rotatif autour de l'axe de l'alésage (4, 5) et deux zones médianes (6, 7) recoupant les alésages (4, 5) au voisinage de leur partie commune, de part et d'autre des engrenages (8, 9) et débouchant chacune dans le prolongement d'un conduit de lubrification (20), au niveau de la surface plane (18) de la pièce (1) du moteur constituant une face limitant la chambre (3) perpendiculairement aux axes des alésages (4, 5), l'un des engrenages (8) étant relié à un moyen d'entraînement en rotation (10, 14, 15) et engrènant avec le second engrenage (9), caractérisé par le fait que la pièce (1) du moteur comporte un alésage borgne (17) dont le fond (18) constitue la surface plane sur laquelle débouchent des conduits de lubrification (20) et que le corps (2) de la pompe comporte une partie (21) limitée extérieurement par une surface cylindrique entourant la chambre (3) dont l'axe est parallèle à l'axe des alésages (4, 5) de la chambre, cette partie (21) étant logée dans l'alésage borgne (17) de la pièce (1) du moteur, en contact étanche avec cet alésage (17), dans une zone continue entourant la chambre (3) et la fixation du corps (2) de la pompe sur la pièce (1) du moteur étant assurée par des vis (28) traversant sa partie cylindrique (21) suivant des directions axiales et engagées dans des trous taraudés de la pièce (1) du moteur.

2.- Dispositif suivant la revendication 1, caractérisé par le fait que chacune des vis (28) est entourée, au niveau du fond (18) de l'alésage borgne (17), par un joint d'étanchéité faciale (30) interposé entre le corps (2) de la pompe et le fond (18) de l'alésage borgne (17).

3.- Dispositif selon la revendication 2, caractérisé par le fait que les joints d'étanchéité (30) sont constitués par des anneaux en silicone déposés par sérigraphie sur le corps (2) ou sur le fond (18) de l'alésage (17) de la pièce (1) du moteur.

4.- Dispositif suivant l'une quelconque des revendications 1, 2 et 3, caractérisé par le fait que le contact étanche entre la partie (21) du corps (2) et l'alésage (17) de la pièce (1) du moteur est réalisé par un joint torique (25) intercalé entre la surface cylindrique extérieure de la partie (21) du corps (2) de la pompe et la surface cylindrique de l'alésage (17).

5.- Dispositif suivant la revendication 4, caractérisé par le fait que le joint torique (25) est disposé dans une gorge (24) usinée sur la surface cylindrique extérieure de la partie cylindrique (21) du corps (2).

6.- Dispositif selon l'une quelconque des revendications 1, 2 et 3, caractérisé par le fait que le contact étanche entre le corps (2) de la pompe et la pièce (1) du moteur, autour de la chambre (3) est réalisé par un dépôt continu de matériau d'étanchéité sur la partie du corps (2) de la pompe venant en contact avec le fond (18) de l'alésage borgne (17), autour de la chambre (3) et des vis (28).

7.- Dispositif selon l'une quelconque des revendications 1, 2 et 3, caractérisé par le fait que le contact étanche entre la partie cylindrique (21) du corps (2) de la pompe et l'alésage (17, 18) est assuré par un dépôt continu de matériau d'étanchéité sur le fond (18) de l'alésage (17, 18) sur sa partie venant en contact avec le corps de la pompe (2) autour des conduits (20).

8.- Dispositif selon l'une quelconque des revendications 1 à 7, caractérisé par le fait que les moyens d'entraînement en rotation de l'engrenage entraîné (8) comprennent un arbre d'entraînement (10) traversant le corps (2) de la pompe, à l'intérieur d'un palier (12) comportant un joint d'étanchéité (26) et qu'une chambre annulaire (32) est usinée à l'intérieur du corps (2) de la pompe, autour de l'arbre (10), entre le joint d'étanchéité (26) et l'alésage (4) de l'engrenage entraîné (8), la chambre annulaire (32) étant mise en communication, par au moins un canal (35, 36), avec un compartiment interne (34) du moteur.

## Claims

1. Device for the circulation of a lubricant in a lubrication circuit of an internal combustion engine comprising a gear pump having a body (2) mounted on a part (1) of the engine along a plane face (18) of said part to which lead at least two channels (20) of the lubrication circuit, the body (2) enclosing a chamber (3) comprising two intersecting bore holes (4, 5), with parallel axes, in each of which a gear (8, 9) is rotatably mounted about the axis of the bore holes (4, 5) and two medial zones (6, 7), cutting the bore holes (4, 5) on both sides of the gears (8, 9) near where they intersect, said boreholes each opening into the extension of a lubrication circuit (20), at the level of the plane surface (18) of the motor part (1) forming a face limiting the chamber (3) perpendicular to the axes of the bore holes (4, 5), one of the gears (8) being linked to a rotating traction mechanism (10, 14, 15), and engaging with the second gear (9), characterized in that the engine part (1) comprises a blind hole (17), the bottom of which (18) forms the plane surface onto which open the lubrication channels (20), and that the body (2) of the pump comprises a part (21) limited externally by a cylindrical surface surrounding the chamber (3), the axis of which is parallel to the axes of the bore holes (4, 5) of the chamber, said part (21) being accommodated in the blind hole (17) of the engine part (1), in close contact with said hole (17), in a continuous zone surrounding the chamber (3), the mounting of the body (2) of the pump on the engine part (1) being secured by screws (28) extending through the cylindrical part (21) in the axial direction and being held in tapped holes of the engine part (1).

2. Device according to claim 1, characterized in that each of the screws (28) is surrounded, level with the bottom (18) of the blind hole (17), by a facial seal (30) positioned between the body (2) of the pump and the bottom (18) of the blind hole (17).

3. Device according to claim 2, characterized in that the seals (30) are formed by silicon rings placed by serigraphy on the body (2) or on the bottom (18) of the holes (17) of the engine part (1).

4. Device according to any one of claims 1, 2 and 3, characterized in that the close contact between the part (21) of the body (2) and the hole (17) of the engine part (1) is achieved by an O-ring seal (25) inserted between the external cylindrical face of the part (21) of the body (2) of the pump and the cylindrical face of the hole (17).

5. Device according to claim 4, characterized in that the O-ring seal is placed in a groove (24) machined on the external cylindrical of the cylindrical part (21) of the body (2).

6. Device according to any one of claims 1, 2 and 3, characterized in that the close contact between the body (2) of the pump and the engine part (1), around the chamber (3), is achieved by a continuous deposit of sealing material on the part of the body (2) of the pump coming into contact with the bottom (18) of the blind hole (17) around the chamber (3) and the screws (28) .

7. Device according to any one of claims 1, 2 and 3, characterized in that the close contact between the cylindrical part (21) of the body (2) of the pump and hole (17, 18) is ensured by a continuous deposit of sealing material on the bottom (18) of the hole (17, 18) on its part coming into contact with the pump body (2) around the channels (20).

8. Device according to any one of claims 1 to 7, characterized in that the rotating traction means of the driven gear (8) comprise a drive shaft (10) extending through the body (2) of the pump, inside a bearing having a seal (26), and that an annular chamber (32) is machined inside the body (2) of the pump, around the shaft (10), between the seal (26) and the bore hole (4) of the driven gear (8), the annular chamber (32) being in communication, by means of a channel (35, 36) with an internal compartment (34) of the engine.

**Patentansprüche**

1. Vorrichtung zum Zirkulieren eines Schmiermittels in einem Schmiermittelkreislauf einer Brennkraftmaschine mit einer Zahnradpumpe, die einen Körper (2) aufweist, der an einem Bauteil (1) der Maschine längs einer ebenen Fläche (18) dieses Bauteils angebracht ist, an der wenigstens zwei Leitungen (20) des Schmiermittelkreislaufes münden, wobei der Körper (2) eine Kammer (3) enthält, die von zwei einander überlappenden Bohrungen (4, 5) mit parallelen Achsen, in jeder von denen ein Zahnrad (8, 9) um die Achse der Bohrung (4, 5) drehbar angebracht ist, und von zwei mittleren Zonen (6, 7) gebildet ist, die die Bohrungen (4, 5) in der Nähe ihres gemeinsamen Teils auf beiden Seiten der Zahnräder (8, 9) schneiden und jeweils in der Fortsetzung einer Schmiermittelleitung (20) auf der Höhe der ebenen Fläche (18) des Bauteils (1) der Maschine münden, die eine Fläche bildet, die die Kammer (3) senkrecht zu den Achsen der Bohrungen (4, 5) begrenzt, wobei eines der Zahnräder (8) mit einer Drehantriebseinrichtung (10, 14, 15) verbunden ist und mit dem zweiten Zahnrad (g) kämmt, dadurch gekennzeichnet, daß das Bauteil (1) der Maschine eine Blindbohrung (17) aufweist, deren Boden (18) die ebene Fläche bildet, an der die Schmiermittelleitungen (20) münden, und daß der Körper (2) der Pumpe einen Teil (21) aufweist, der außen von einer Zylinderfläche begrenzt ist, die die Kammer (3) umgibt und deren Achse parallel zur Achse der Bohrungen (4, 5) der Kammer verläuft, wobei dieser Teil (21) in der Blindbohrung (17) des Bauteils (1) der Maschine in dichtem Kontakt mit dieser Bohrung (17) in einem durchgehenden Bereich angeordnet ist, der die Kammer (3) umgibt, und die Befestigung des Körpers (2) der Pumpe an dem Bauteil (1) der Maschine über Schrauben (28) sichergestellt ist, die durch dessen zylindrischen Teil (21) in axialen Richtungen gehen und in Gewindelöcher des Bauteils (1) der Maschine geschraubt sind.

2. Vorrichtung nach Anspruch 1, dadurch gekennzeichnet, daß jede Schraube (28) auf der Höhe des Bodens (18) der Blindbohrung (17) von einer Flächendichtung (30) umgeben ist, die zwischen dem Körper (2) der Pumpe und dem Boden (18) der Blindbohrung (17) angeordnet ist.

3. Vorrichtung nach Anspruch 2, dadurch gekennzeichnet, daß die Dichtungen (30) aus einem Silikonring bestehen, der durch Siebdruck auf den Körper (2) oder auf den Boden (18) der Bohrung (17) des Bauteils (1) der Maschine aufgebracht ist.

4. Vorrichtung nach einem der Ansprüche 1, 2 und 3, dadurch gekennzeichnet, daß der dichte Kontakt zwischen dem Teil (21) des Körpers (2) und der Bohrung (17) des Bauteils (1) der Maschine über einen O-Ring (25) hergestellt ist, der zwischen der äußeren zylindrisohen Fläche des Teils (21) des Körpers (2) der Pumpe und der zylindrischen Fläche der Bohrung (17) angeordnet ist.

5. Vorrichtung nach Anspruch 4, dadurch gekennzeichnet, daß der O-Ring (25) in einer Rille (24) angeordnet ist, die in der äußeren zylindrischen Fläche des zylindrischen Teils (21) des Körpers (2) ausgebildet ist.

6. Vorrichtung nach einem der Ansprüche 1, 2 und 3, dadurch gekennzeichnet, daß der dichte Kontakt zwischen dem Körper (2) der Pumpe und dem Bauteil (1) der Maschine um die Kammer (3) herum über eine durchgehende Auflage eines Dichtungsmaterials auf den Teil des Körpers (2) der Pumpe hergestellt ist, der mit dem Boden (18) der Blindbohrung (17) um die Kammer (3) und die Schraube (28) herum in Kontakt steht.

7. Vorrichtung nach einem der Ansprüche 1, 2 und 3, dadurch gekennzeichnet, daß der dichte Kontakt zwischen dem zylindrischen Teil (21) des Körpers (2) der Pumpe und der Bohrung (17, 18) über eine durchgehende Auflage eines Dichtungsmaterials auf dem Boden (18) der Bohrung (17, 18) an seinem Teil vewirklicht ist, der mit dem Körper der Pumpe (2) um die Leitungen (20) herum in Kontakt kommt.

8. Vorrichtung nach einem der Ansprüche 1 bis 7, dadurch gekennzeichnet, daß die Drehantriebseinrichtung des angetriebenen Zahnrades (8) eine Antriebswelle (10) umfaßt, die quer durch den Körper (2) der Pumpe in einem Lager (12) geht, das eine Dichtung (26) trägt, und daß eine Ringkammer (32) im Inneren des Körpers (2) der Pumpe um die Welle (10) zwischen der Dichtung (26) und der Bohrung (4) des angetriebenen Zahnrades (8) ausgebildet ist, welche Ringkammer (32) über einen Kanal (35, 36) mit einem Innenraum (34) der Maschine in Verbindung kommt.

FIG.1

FIG.2

FIG.3

FIG.4